# EUROPÄISCHE PATENTSCHRIFT

(11) **EP 0 507 065 B1**
(45) Veröffentlichungstag und Bekanntmachung des Hinweises auf die Patenterteilung: **22.11.1995**
(21) Anmeldenummer: 92102631.6
(22) Anmeldetag: 18.02.1992
(51) Int. Cl.: C01B 13/02, B01D 53/04

(54) **Verfahren zur Sauerstoffanreicherung**
Process for enriching oxygen
Procédé d'enrichissement de l'oxygène

(30) Priorität: 01.03.1991 DE 4106547
(43) Veröffentlichungstag der Anmeldung: 07.10.1992
(73) Patentinhaber: BAYER AG, 51368 Leverkusen (DE)
(72) Erfinder: Reiss, Gerhard, Dipl.-Ing., W-5090 Leverkusen (DE); Puppe, Lothar, Dr., W-5093 Burscheid (DE)

(56) Entgegenhaltungen:
- DE-B- 1 280 225
- PATENT ABSTRACTS OF JAPAN vol. 10, no. 120 (C-343)(2177) 6. Mai 1986
- PATENT ABSTRACTS OF JAPAN vol. 3, no. 109 (C-58)12. September 1979

## Beschreibung

Die vorliegende Erfindung betrifft ein Verfahren zur Sauerstoffanreicherung von Luft in einem adsorptiven Druckwechsel-Verfahren mit Hilfe von Molekularsieb-Zeolithen, in dem die Desorption der adsobierten Phase bei einem Druck unter dem Druck der Lufttrennung und N₂-Adsorption erfolgt und nach der Desorption die Molekularsiebschüttung mit produziertem Sauerstoffgas im Gegenstrom zum Gasfluß der Lufttrennung wieder teilweise oder ganz auf den Druck der Lufttrennung gebracht wird.

Die Gewinnung von Sauerstoff aus Luft geschieht meistens durch Destillation bzw. Rektifikation der verflüssigten Luft bei tiefen Temperaturen in Tieftemperaturzerlegungsanlagen. Diese Anlagen sind in ihren konstruktiven Merkmalen kompliziert, weshalb seit etwa 20 Jahren immer mehr die adsorptive Zerlegung der Luft in Sauerstoff und Stickstoff mit Molekularsieb-Zeolithen oder Aktivkohle-Molekularsieben durchgeführt wird. Hierbei werden für die Erzeugung von Sauerstoff mit Molekularsieb-Zeolithen Druckwechselprozesse VSA/PSA eingesetzt, die sich in ihrer Ausführung hauptsächlich in ihren Druckbereichen unterscheiden (Zeolites as Catalysts, Sorbents and Detergent Builders, Elsevier, Vol. 46, 1989, page 607-614).

Gemeinsam ist all diesen Verfahren, daß Luft bei einem Adsorptionsdruck von 1 bar (VSA) bzw. 3-4 bar (PSA) und einer Temperatur von etwa Raumtemperatur von 10-40° C durch eine MS-Zeolithschüttung geleitet wird, H₂O, CO₂ und N₂ der Luft adsorbiert wird und O₂-reiches Gas die Schüttung (Adsorber) verläßt. Die Desorption der adsorbierten Komponenten erfolgt stets bei einem Druck unter dem Adsorptionsdruck, z.B. bei 1 atm unter Spülung der Schüttung mit produziertem Sauerstoff (PSA) oder bei Unterdruck durch Evakuieren mit oder ohne diese Spülung (VSA).

EP-A 374 631 beschreibt ein Verfahren zur Sauerstoffanreicherung von Luft mittels VSA-Verfahren, wobei die Adsorber mit Ca-Zeolith A-Molekularsieben gefüllt sind, die unterschiedliche Adsorptionscharakteristika aufweisen. Durch diesen Adsorberaufbau wird das VSA-Verfahren energiegünstiger, da der Energieverbrauch der Vakuumpumpe reduziert werden kann.

Es sind Verfahren bekannt, bei denen zur Erhöhung der Adsorptionsleistung für Stickstoff und zur Erhöhung der Selektivität der Adsorption des Stickstoffs gegenüber Sauerstoff die Luft vor den Adsorbern auf -30 bis -60° C vorgekühlt wird (DE-A 1 280 225). Hierbei wird die zu trennende Luft durch eine externe Kältemaschine vorgekühlt und zusätzlich noch Kühlenergie durch Wärmeaustausch des kalten produzierten Sauerstoffs und des kalten desorbierten Stickstoffs gewonnen. Der apparative Aufwand ist hierbei erheblich, d.h. die Investitionskosten solcher Anlagen sind so hoch, daß sich gegenüber Tieftemperaturzerlegungsanlagen bzw. konventionelle VSA/PSA-Verfahren keine Vorteile ergeben.

Adsorptive Trennverfahren basierend auf VSA/PSA-Verfahren haben auch stets die Aufgabe die Ausbeute, d.h. das Verhältnis des Produkts zum Rohgasstrom, so hoch wie möglich zu halten. Hohe Ausbeute bedeutet nämlich auch geringen Energiebedarf.

Ein Problem der Vorkühlung der Luft ist das Ausscheiden der Feuchtigkeit. Erfolgt dies vor den Adsorbern, muß Feuchtigkeit ausgefroren werden, was apparativ umständlich ist und die Investition erheblich erhöht. Es gibt auch die Möglichkeit, die Lufttrennung in zwei hintereinanderliegenden Adsorptionsmittelschüttungen durchzuführen, d.h. zuerst Trocknung danach Stickstoffabtrennung.

Die Abkühlung der Luft, mit eventuellen Kältespeichersystemen, könnte man dann zwischen den beiden Schüttungen anbringen. Dies hat aber wieder den Nachteil eines aufwendigen apparativen Aufbaus, jeder N₂-Abtrennadsorber benötigt eine Kühleinrichtung. Außerdem wird dadurch das Totvolumen, d.h. nicht trennwirksames Volumen, der Adsorber vergrößert und damit die Ausbeute für die O₂-Erzeugung verkleinert.

Aufgabe dieser Erfindung ist die Bereitstellung eines Verfahrens, welches die beschriebenen Nachteile nicht aufweist.

Eine überraschende Lösung wurde nun für alle VSA/PSA-Lufttrennprozesse gefunden, in denen nach dem N₂-Desorptionsschritt die Adsorptionsmittelschüttung (Adsorber) mit Produkt, d.h. O₂-reichem Gas, wieder auf Adsorptionsdruck gebracht wird. Bei diesem Prozess wird ein Teil des produzierten O₂-Stroms verwendet, um im Gegenstrom zur Adsorptionsrichtung (= Richtung der Luftströmung bei dessen Trennung) die Schüttung wieder auf einen höheren Druck zu bringen.

Gegenstand dieser Erfindung ist somit ein Verfahren zur Sauerstoffanreicherung von Luft in einem adsorptiven Druckwechsel-Verfahren mit Hilfe von Molekularsieb-Zeolithen, in dem die Desorption der adsorbierten Phase bei einem Druck unter dem Druck der Lufttrennung und N₂-Adsorption erfolgt, nach der Desorption die Molekularsiebschüttung mit produziertem Sauerstoffgas im Gegenstrom zum Gasfluß der Lufttrennung wieder teilweise oder ganz auf den Druck der Lufttrennung gebracht wird, wobei Produktgas über ein Kühlaggregat gekühlt und zum Bespannen der Molekularsiebschüttung eingesetzt wird.

Gemäß dem erfindungsgemäßen Verfahren wird somit der Füllgasstrom bzw. ein Teilstrom des Füllgasstroms gekühlt, wobei die hierzu notwendige Energie wesentlich geringer als erwartet war.

Bevorzugt werden beim erfindungsgemäßen Verfahren Molekularsieb-Zeolithen des Typs A oder X bzw. Y eingesetzt. Das erfindungsgemäße Verfahren kann besonders wirtschaftlich betrieben werden, wenn die Desorption der adsorbierten Komponenten bei Unterdruck erfolgt.

Ebenso vorteilhaft kann aber auch das erfindungsgemäße Verfahren so durchgeführt werden, daß die Desorption der adsorbierten Komponenten bei etwa 1 bar (abs) und die Trennung der Luft über 1 bar (abs) erfolgt.

Besonders gute Ergebnisse werden erzielt, wenn die Kühlung des Füllgases so bemessen wird, daß die mittlere tiefste Temperatur der Molekularsiebschüttung 0 bis -60°C beträgt.

Das erfindungsgemäße Verfahren soll in den folgenden Beispielen erläutert werden, ohne daß darin eine Einschränkung zu sehen ist.

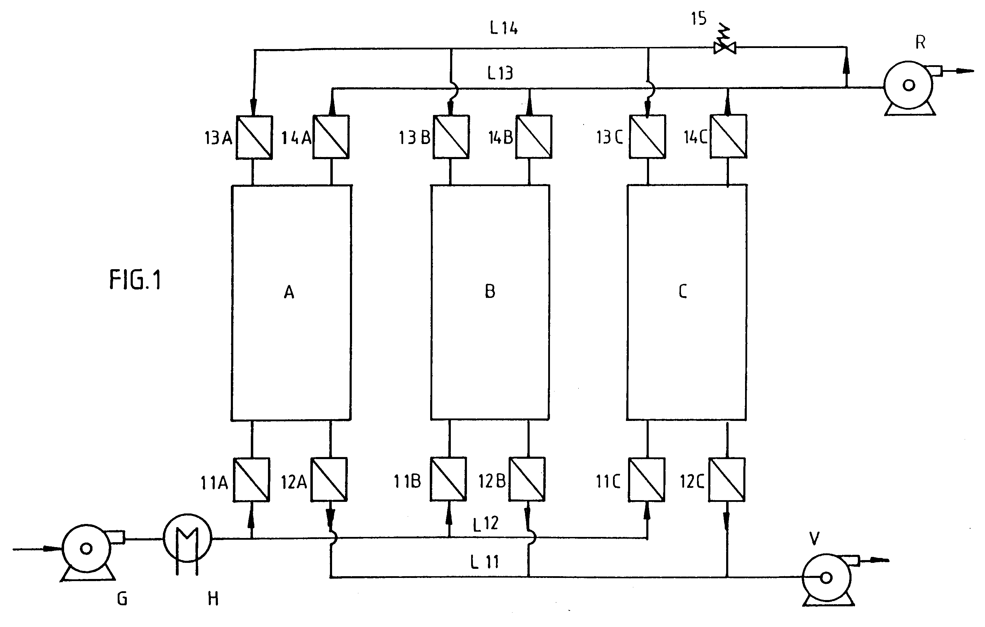

Die Versuche wurden in einer VSA-Anlage gemäß Fig. 1 durchgeführt.
- Adsorbergröße:: Schüttdurchmesser = 550 mm
Schütthöhe = 2.500 mm
Am Boden der Adsorber befand sich stets eine Schüttung aus Kieselgel, Menge jeweils 70 Liter pro Adsorber.

Da das erfindungsgemäße Verfahren unabhängig von speziellen VSA/PSA-Modifikationen ist, wurde ein Standardverfahren der O₂-Anreicherung von Luft gewählt.

Umgebungsluft wurde mit Gebläse auf 1,05 bar (abs) verdichtet und im Erhitzer H stets auf +30°C aufgewärmt und über Leitung L 12 in die Adsorber A/B/C geleitet. O₂-reiches Produkt wurde aus Leitung L 13 abgezogen und über Gebläse R die Produktmenge an die Umgebung abgegeben. Die Adsorber wurden mit einer Vakuumpumpeneinheit V über Leitung L 11 stets auf 200 mbar abgesaugt, wobei die Leistung bzw. die Drehzahl der Pumpeneinheit über einen Frequenzumrichter geregelt werden konnte. Das Befüllen der Adsorber mit O₂-Produkt auf 1,05 bar (abs) erfolgte über Ventil 15, Leitung L 14. Jeder Prozeßschritt betrug 60 Sekunden.

Die Adsorberwände, Ventile 13/14, Ventil 15, Leitung L 13 und L 14 waren mit einer Wärmeisolierung mit einer Stärke von ca, 6 bis 8 cm versehen.

Die eingesetzten MS-Zeolithe hatten eine kugelförmige Granulatform, Kornspektrum 1,5 bis 2,5 mm, Schüttgewicht ca. 660 bis 680 g/l, H₂O-Gehalt gemessen nach DIN 8948 - P₂O₅-Methode von unter 0,5 Gew.-%.

Die Leistungswerte der Vakuumpumpeneinheit wurden direkt gemessen, wobei die Verluste durch den Frequenzumrichter abgezogen wurden. In großtechnischen Anlagen erübrigt sich der Frequenzumrichter, da hier zu einer vorgegebenen Pumpengröße und O₂-Produktmenge die MS-Zeolithmenge berechnet wird.

Für die Versuche wurden zwei verschiedene Zeolithtypen eingesetzt: A = Ca-Zeolith A; B = Na-Zeolith X.

Probe A wurde gemäß DE-A 37 18 673 hergestellt, mit einem Calziumgehalt des Zeolith A von entsprechend 0,72 CaO/Al₂O₃.

Probe B wurde gemäß DE-A 20 16 838 hergestellt, Zusammensetzung entsprechend Beispiel 2, wobei das SiO₂/Al₂O₃-Verhältnis des hierfür eingesetzten Zeolith X-Pulvers 2,4 betrug.

Um einen gewünschten Restwassergehalt der Granulate von unter 0,5 Gew.-% H₂O zu erreichen, wurden die Granulate mit trockenem (H₂O-Taupunkt -60° C) Stickstoff bei 450 bis 500° C aktiviert.

### Beispiele

Beispiel 1 ist ein bekannter Standardprozess und dient als Vergleich zum erfindungsgemäßen Verfahren.

### Beispiel 1 - Abbildung 1

### Taktzeit 0 - 60 Sekunden

Luft von 30° C strömt durch Ventil 11 A in Adsorber A, O₂-Produkt wird über Ventil 14 A, Leitung L 13 und Gebläse R abgezogen. Ventile 13 A und 12 A sind geschlossen. Adsorber B wird von ca. 1 bar (abs) auf 0,2 bar (abs) über Ventil 12 B, Pumpe V evakuiert. Ventile 13 B und 11 b sind geschlossen. Adsorber C wird von 0,2 bar auf 1,0 bar (abs) mit O₂-Produkt über Ventil 15 und Ventil 13 C befüllt. Ventile 14 C, 11 C und 12 C sind geschlossen.

### Taktzeit 60 - 120 Sekunden

Analog zu Taktzeit 0 - 60 Sekunden, d.h. Adsorber A wird evakuiert, Adsorber B befüllt, Adsorber C produziert Sauerstoff.

### Taktzeit 120 - 180 Sekunden

d.h. Adsorber A wird befüllt, Adsorber B produziert Sauerstoff, Adsorber C wird evakuiert.

### Beispiel 1A

Es wurde Molekularsieb-Zeolithgranulat gemäß Probe A eingesetzt, jeweils 355 kg pro Adsorber. Bei einer Produktmenge von 21,04 Nm³/h betrug die O₂-Konzentration im Produkt 93 Vol-%. Die Vakuumpumpe hatte bei 400 mbar ein Saugvermägen von 506,66 m³/h (25° C), bei einer mittleren Leistungsaufnahme von 9,603 KW, d.h. der spezifische Energieverbrauch betrug 0,4907 KWh/Nm³O₂.

### Beispiel 1B

Es wurde Molekularsieb-Zeolithgranulat gemäß Probe B eingesetzt, jeweils 365 kg pro Adsorber. Bei einer O₂-Konzentration von 93 % im Produkt wurde eine Produktmenge von 16,81 Nm³/h gewonnen. Die Vakuumpumpe hatte bei 0,4 bar ein Saugvermögen von 436,6 m³/h (25° C) und einen Stromverbrauch von 7,99 KW entsprechend 0,5108 KWh/Nm³O₂.

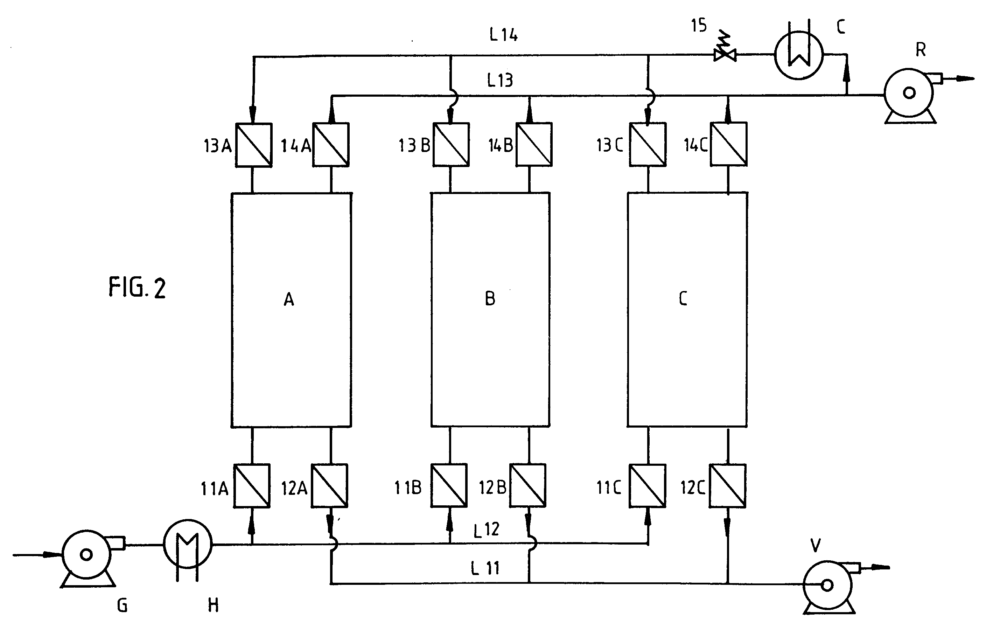

Der Versuchsaufbau des erfindungsgemäßen Verfahrens ist aus Abbildung 2 zu erkennen. Zwischen O₂-Gebläse R und Ventil 15 wurde in Leitung L 14 ein Kühlaggregat eingebaut, um die O₂-Menge, die über die Leitung L 14 in den evakuierten Adsorber strömt, zu kühlen. In den Versuchen wurde, so weit wie möglich, bei gleicher O₂-Produktmenge die gleiche Kühlleistung eingestellt, wodurch die mittlere MS-Zeolithtemperatur auf unter -10° C absank. Es wurde ein gewerblich erhältliches Freon-Kälteaggregat eingesetzt.

Es ist auch denkbar, die Energie für die Abkühlung aus anderen Quellen zu beziehen, z.B. aus einer vorhandenen Kältesole, oder falls ein sog. back-up-System vorhanden ist, die Kälte bzw. Energie aus der Verdampfung des flüssigen Sauerstoffs. Da das austretende Produktgas noch kalt ist, besteht auch die Möglichkeit, über einen Wärmeaustauscher die "Kälteenergie" des Produktgases zumindest teilweise zurückzugewinnen. Diese Rückgewinnung erübrigt sich aber, wenn der Produktgasstrom noch verdichtet werden muß, z.B. auf 5 bis 20 bar und dadurch der Verdichter bei tiefen Ansaugtemperaturen kleiner gewählt werden kann.

### Beispiel 2

Der Versuchsablauf des erfindungsgemäßen Verfahrens ist identisch mit dem des Beispiels 1, die Änderung ist die oben aufgeführte Kühlung des Füllgasstroms.

### Beispiel 2A

Es wurde Molekularsieb-Zeolith Probe A eingesetzt, je Adsorber 355 kg. Bei einer O₂-Konzentration von 93 % im Produktstrom wurde eine Produktmenge von 21,02 Nm³/h ermittelt. Die Vakuumpumpe hatte bei 0,4 bar ein Saugvermögen von 684,45 m³/h (+25° C), eine Leistungsaufnahme von 13,42 KW. Der Kühler C hatte einen Verbrauch von 320 Watt, die gesamte Leistungsaufnahme von Pumpe und Kühler betrug demnach 0,702 KWh/Nm³O₂. Mit Probe A konnte demnach keine Verbesserung gegenüber dem Standardprozess des Beispiels 1A erreicht werden.

### Beispiel 2B

Es wurde Molekularsieb-Zeolith Probe B eingesetzt, je Adsorber 365 kg. Bei einer O₂-Konzentration von 93 % wurde eine Produktmenge von 33,65 Nm³/h erzielt. Die Saugleistung der Vakuumpumpe V betrug bei 400 mbar 737,8 m³/h (25° C), der mittlere Energieverbrauch dieser Pumpe 14,46 KW. Gleichzeitig wurden für den Kühler C 0,5 KW eingestellt. Der spezifische Energieverbrauch von Kühler und Vakuumpumpe betrug deshalb 0,478 KWh/Nm³O₂.

Mit dem Versuch des Beispiels 2B konnte der niedrigste spezifische Energieverbrauch erzielt werden und die weitaus höchste O₂-Produktmenge - bezogen auf eingesetzte MS-Zeolithmenge. Durch Kühlung des Füllgasstroms und durch Optimierung und Anpassung der MS-Zeolithqualität konnte deshalb ein Verfahren mit niedrigsten Energiewerten und niedrigsten Investitionskosten gefunden werden.

## Patentansprüche

1. Adsorptives Druckwechsel-Verfahren zur Sauerstoffanreicherung von Luft mit Hilfe von Molekularsieb-Zeolithen, in dem die Desorption der adsorbierten Phase bei einem Druck unter dem Druck der Lufttrennung und N₂-Adsorption erfolgt, nach der Desorption die Molekularsiebschüttung mit produziertem Sauerstoffgas im Gegenstrom zum Gasfluß der Lufttrennung wieder teilweise oder ganz auf den Druck der Lufttrennung gebracht wird, dadurch gekennzeichnet, daß Produktgas bzw. ein Teilstrom hiervon über ein Kühlaggregat gekühlt und zum Bespannen der Molekularsiebschüttung eingesetzt wird.

2. Verfahren gemäß Anspruch 1, dadurch gekennzeichnet, daß Molekularsieb-Zeolithe des Typs A oder X bzw. Y eingesetzt werden.

3. Verfahren gemäß einem der Ansprüche 1 oder 2, dadurch gekennzeichnet, daß die Desorption der adsorbierten Komponenten bei Unterdruck erfolgt.

4. Verfahren gemäß einem der Ansprüche 1 oder 2, dadurch gekennzeichnet, daß die Desorption der adsorbierten Komponenten bei etwa 1 bar (abs) und die Trennung der Luft über 1 bar (abs) erfolgt.

5. Verfahren gemäß einem oder mehreren der Ansprüche 1 bis 4, dadurch gekennzeichnet, daß die Kühlung des Füllgases so bemessen wird, daß die mittlere tiefste Temperatur der Molekularsiebschüttung 0 bis -60° C beträgt.

## Claims

1. An adsorptive alternating pressure process for the enrichment of air with oxygen using molecular sieve zeolites, in which the adsorbed phase is desorbed under a pressure below the air separation and N₂ adsorption pressure and, after desorption, the molecular sieve adsorber is completely or partly returned to the air separation pressure with oxygen gas produced in countercurrent to the air separation gas flow, characterized in that product gas or a partial stream thereof is cooled in a cooling unit and is used to cover the molecular sieve adsorber.

2. A process as claimed in claim 1, characterized in that molecular sieve zeolites of type A or X and Y are used.

3. A process as claimed in claim 1 or 2, characterized in that the adsorbed components are desorbed under reduced pressure.

4. A process as claimed in claim 1 or 2, characterized in that desorption of the adsorbed components takes place at around 1 bar (abs) while separation of the air takes place at a pressure above 1 bar (abs).

5. A process as claimed in one or more of claims 1 to 4, characterized in that cooling of the filling gas is gauged in such a way that the average lowest temperature of the molecular sieve adsorber is 0 to -60°C.

## Revendications

1. Procédé d'adsorption modulé en pression pour l'enrichissement d'air en oxygène à l'aide de tamis moléculaires-zéolites, dans lequel on effectue la désorption de la phase adsorbée à une pression inférieure à la pression de la séparation de l'air et de l'adsorption de N₂, après la désorption on amène le lit de tamis moléculaire à nouveau partiellement ou totalement à la pression de la séparation de l'air avec du gaz d'oxygène produit à contre-courant de l'écoulement du gaz de la séparation de l'air, caractérisé en ce qu'on refroidit le gaz de produit ou un courant partiel de celui-ci par l'intermédiaire d'un agrégat réfrigérant et qu'on l'utilise pour garnir le lit de tamis moléculaire.

2. Procédé selon la revendication 1, caractérisé en ce qu'on utilise des tamis moléculaires-zéolites du type A ou X respectivement Y.

3. Procédé selon l'une quelconque des revendications 1 ou 2, caractérisé en ce qu'on réalise la désorption des constituants adsorbés à une pression inférieure à la pression atmosphérique.

4. Procédé selon l'une quelconque des revendications 1 ou 2, caractérisé en ce qu'on réalise la désorption des constituants adsorbés à environ 1 bar (absolu) et la séparation de l'air à une pression supérieure à 1 bar (absolu).

5. Procédé selon l'une quelconque ou plusieurs des revendications 1 à 4, caractérisé en ce qu'on mesure le refroidissement du gaz de remplissage de sorte que la température moyenne la plus faible du lit de tamis moléculaire est comprise entre 0 et -60°C.
